# EUROPEAN PATENT APPLICATION

(11) **EP 4 624 084 A1**
(43) Date of publication of application: **01.10.2025**
(21) Application number: 23936711.3
(22) Date of filing: 15.11.2023
(51) Int. Cl.: B23K 20/10, H01M 50/566, H01M 50/105, B23K 101/36

(54) **WELDING MACHINE**

(30) Priority: 09.05.2023 KR 20230059969
(71) Applicant: LG Energy Solution, Ltd., Seoul 07335 (KR)
(72) Inventor: CHOI, Han-Seok, Daejeon 34122 (KR); KIM, Dong-Cho, Daejeon 34122 (KR); LEE, In-Seok, Daejeon 34122 (KR); LEE, Chang-Je, Daejeon 34122 (KR)
(74) Representative: Hoffmann Eitle
(86) International application number: PCT/KR2023/018393
(87) International publication number: WO 2024/232488

(57) **Abstract**

Disclosure is a welding machine. A welding machine for welding a plurality of metal materials according to an embodiment of the present disclosure includes an anvil on which the plurality of metal materials are placed, a horn located over the anvil and including a plurality of protrusions protruding toward the anvil, and a processor configured to vibrate the horn to form a hole passing through the plurality of metal materials.

## Description

### TECHNICAL FIELD

The present disclosure relates to a welding machine.

The present application claims priority to Korean Patent Application No. 10-2023-0059969 filed on May 9, 2023 in the Republic of Korea, the disclosures of which are incorporated herein by reference.

### BACKGROUND ART

As the demand for portable electronic products such as laptops, video cameras, and mobile phones has rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Also, electrode tabs provided in a plurality of electrode assemblies may be coupled by using a welding method. A plurality of electrode tabs may be welded and then may be connected to an electrode lead through welding.

**In** this case, the plurality of electrode tabs may be coupled through two welding methods. The plurality of electrode tabs may be primarily coupled through ultrasonic welding. Next, the plurality of electrode tabs may be secondarily coupled through laser welding. When the plurality of electrode tabs are connected through ultrasonic welding, it is necessary to rapidly and accurately detect welding defects.

### DISCLOSURE

### Technical Problem

The present disclosure is designed to solve the problems of the related art.

**In** particular, the present disclosure is directed to providing a welding machine including a detection unit capable of rapidly and accurately detecting welding defects.

The present disclosure is also directed to providing a welding machine that is easy to maintain and repair.

### Technical Solution

In one aspect of the present disclosure, there is provided a welding machine for welding a plurality of metal materials, the welding machine including an anvil on which the plurality of metal materials are placed, a horn located over the anvil and including a plurality of protrusions protruding toward the anvil, and a processor configured to vibrate the horn to form a hole passing through the plurality of metal materials.

Also, the welding machine may further include a vision sensor configured to detect the hole.

Also, the processor may be configured to vibrate the plurality of protrusions in a circular trajectory.

Also, the plurality of protrusions may include a welding protrusion configured to weld the plurality of metal materials, and a first penetrating protrusion configured to form a hole passing through the plurality of metal materials.

Also, a protrusion length of the first penetrating protrusion may be greater than a protrusion length of the welding protrusion.

Also, the anvil may include a receiving portion facing the first penetrating protrusion.

Also, the anvil may further include a cutting blade formed around the receiving portion.

Also, the anvil may be configured so that at least a portion of the plurality of metal materials is accommodated in the receiving portion.

Also, the cutting blade may be configured to be replaceable.

Also, the anvil may include a second penetrating protrusion protruding toward the horn and facing the first penetrating protrusion.

Also, the horn may further include a groove formed around the first penetrating protrusion.

Also, the horn may be configured to form a protruding portion around the hole of the plurality of metal materials.

Also, the second penetrating protrusion may be configured to be replaceable.

Also, in one aspect of the present disclosure, there is provided a battery cell including a plurality of metal materials welded by the welding machine.

### Advantageous Effects

According to at least one of embodiments of the present disclosure, welding defects may be detected rapidly and accurately.

According to at least one of embodiments of the present disclosure, a hole may be formed in a plurality of metal materials to detect welding defects.

According to at least one of embodiments of the present disclosure, a welding machine including a detection unit capable of rapidly and accurately detecting welding defects may be provided.

According to at least one of embodiments of the present disclosure, a welding machine that is easy to maintain and repair may be provided.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings.
FIG. 1 is a view illustrating an example of a battery cell.
FIG. 2 is a cross-sectional view illustrating some elements, taken along line A-A' of FIG. 1.
FIG. 3 is a view illustrating a welding machine according to an embodiment of the present disclosure.
FIG. 4 is a view illustrating an example where a horn of a welding machine transmits vibration according to an embodiment of the present disclosure.
FIGS. 5 and 6 are views illustrating a process in which a hole is formed in a plurality of metal materials by a welding machine according to an embodiment of the present disclosure.
FIG. 7 is a view illustrating welding performed by a welding machine according to an embodiment of the present disclosure.
FIG. 8 is a view illustrating a welding machine according to another embodiment of the present disclosure.
FIG. 9 is a view illustrating a welding machine according to still another embodiment of the present disclosure.
FIG. 10 is a view illustrating an example where welding quality is inspected by a welding machine according to an embodiment of the present disclosure.
FIG. 11 is a view illustrating a welding machine according to still another embodiment of the present disclosure.
FIG. 12 is a view illustrating a welding machine according to still another embodiment of the present disclosure.
FIG. 13 is a view illustrating welding performed by a welding machine according to still another embodiment of the present disclosure.
FIG. 14 is a view illustrating a welding machine according to still another embodiment of the present disclosure.
FIG. 15 is a view illustrating a first penetrating protrusion of a welding machine according to still another embodiment of the present disclosure.
FIG. 16 is a view illustrating a welding machine according to still another embodiment of the present disclosure.
FIG. 17 is a view illustrating an example where welding quality is inspected by a welding machine according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

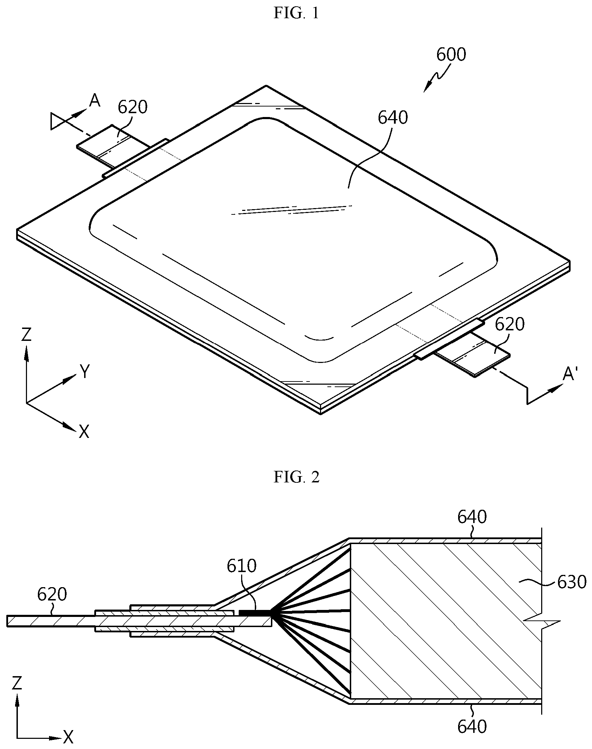

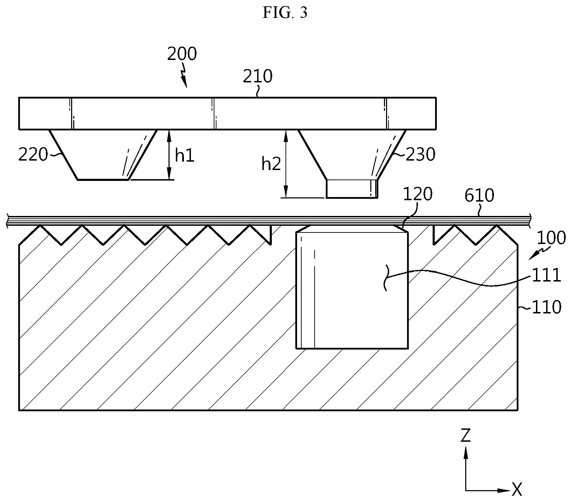

FIG. 1 is a view illustrating an example of a battery cell 600. FIG. 2 is a cross-sectional view illustrating some elements, taken along line A-A' of FIG. 1. FIG. 3 is a view illustrating a welding machine according to an embodiment of the present disclosure. Referring to FIGS. 1 to 3, a welding machine according to an embodiment of the present disclosure may include an anvil 100, a horn 200, and a processor (not shown). The battery cell 600 may refer to a secondary battery. The battery cell 600 may be a pouch-type battery cell. The battery cell 600 may include a plurality of electrode assemblies 630. The electrode assembly 630 may be configured so that an electrode active material is coated on an electrode current collector. A part of the electrode current collector may extend to form an electrode tab 610. The electrode tab 610 may be provided in each electrode assembly 630. A plurality of electrode tabs 610 may be coupled by being welded. The plurality of electrode tabs 610 may be coupled to an electrode lead 620. The battery cell 600 may include a case 640 surrounding the electrode assembly 630, the electrode tab 610, and the electrode lead 620. The case 640 may surround at least a part of the electrode lead 620. The electrode tab 610 may be referred to as a metal foil 610 or a metal material 610. The electrode tab 610 may be coupled through laser welding after ultrasonic welding is performed.

The welding machine may be configured to weld a plurality of metal materials 610. The plurality of metal materials 610 may be a plurality of electrode tabs 610 overlapping each other or a plurality of electrode tabs 610 stacked on each other. The welding machine may weld the plurality of electrode tabs 610 by using ultrasonic welding.

The anvil 100 may be configured so that the plurality of metal materials 610 are placed thereon. For example, the anvil 100 may have a large top surface, and the metal materials may be seated on the large top surface. Furthermore, the anvil 100 may be configured to stably support the plurality of metal materials 610 even during welding.

The horn 200 may be located over the anvil 100. The horn 200 may include a plurality of protrusions 220, 230 protruding toward the anvil 100. The plurality of protrusions 220, 230 may contact the plurality of metal materials 610 and may transmit ultrasonic vibration.

The processor may be configured to operate and control the welding machine. The processor may vibrate the horn 200 to form a hole 611 passing through the plurality of metal materials 610.

According to this configuration of the present disclosure, the welding machine may weld the plurality of metal materials 610 and may form a hole passing through the plurality of metal materials 610. Accordingly, a user or the processor may determine whether the plurality of metal materials 610 are well welded by checking whether the hole passing through the plurality of metal materials 610 is formed. For example, when the hole passing through the plurality of metal materials 610 is not identified, it may be determined that welding of the plurality of metal materials 610 has not been successful.

According to this configuration of the present disclosure, the user or the processor may clearly and easily determine whether welding of the plurality of metal materials 610 has been successful.

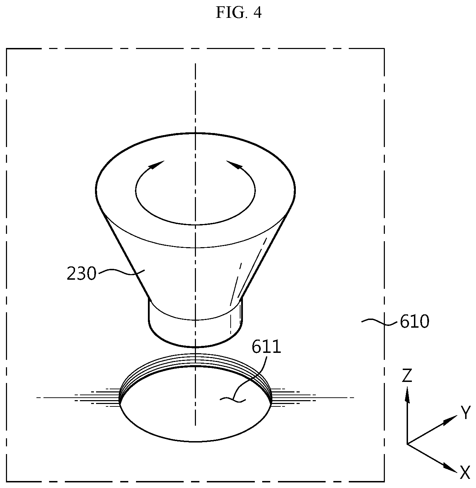

FIG. 4 is a view illustrating an example where the horn 200 of the welding machine transmits vibration according to an embodiment of the present disclosure. Referring to FIGS. 3 and 4, the welding machine according to an embodiment of the present disclosure may be configured so that the plurality of protrusions 220, 230 vibrate in a circular trajectory. In particular, although one protrusion 230 vibrates in a circular trajectory in FIG. 4, another protrusion 220 may also vibrate in a circular trajectory. Also, the circular vibration of the protrusions 220, 230 may be controlled by the processor.

A conventional welding machine is configured to form a straight welding line. However, according to this configuration of the present disclosure, because the plurality of welding protrusions 220, 230 are configured to form a circular trajectory, the number of welding spots or indentations may be reduced compared to the straight welding line. Accordingly, an interval between the plurality of protrusions 220, 230 may increase, and a degree of freedom in changing a shape of each of the protrusions 220, 230 may increase.

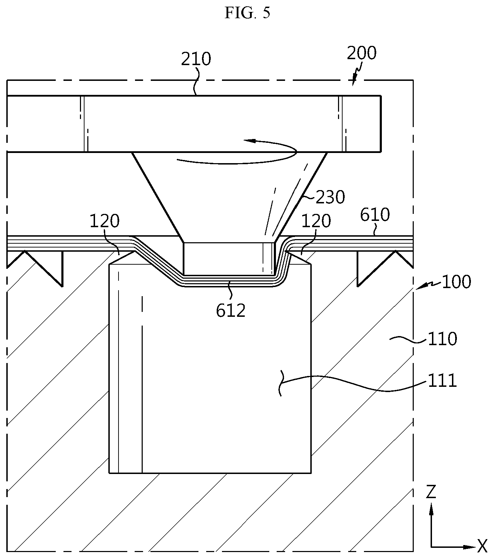

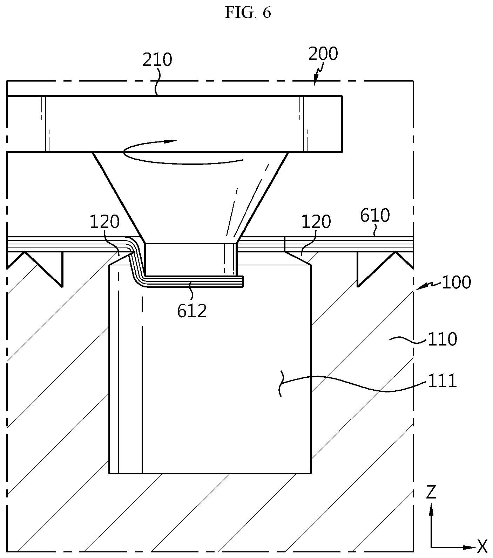

FIGS. 5 and 6 are views illustrating a process in which a hole is formed in the plurality of metal materials 610 by the welding machine according to an embodiment of the present disclosure. According to FIGS. 3 to 6, the plurality of protrusions 220, 230 of the welding machine according to an embodiment of the present disclosure may include a welding protrusion 220 for welding the plurality of metal materials 610 and a first penetrating protrusion 230 for forming a hole 611 passing through the plurality of metal materials 610.

When ultrasonic vibration is generated from the horn 200, the welding protrusion 220 may weld the plurality of metal materials 610. At the same time, the first penetrating protrusion 230 may form the hole 611 passing through the plurality of metal materials 610. At least one welding protrusion 220 and at least one first penetrating protrusion 230 may be provided. The first penetrating protrusion 230 may be located adjacent to the welding protrusion 220.

According to this configuration of the present disclosure, because welding and hole formation are performed at the same time, the reliability of determining welding success based on whether a hole is formed or a size of a hole may be improved.

Referring to FIGS. 3 to 6, a protrusion length h2 of the first penetrating protrusion 230 of the welding machine according to an embodiment of the present disclosure may be greater than a protrusion length h1 of the welding protrusion 220.

A body 210 of the horn 200 may face the anvil 100. The welding protrusion 200 and the first penetrating protrusion 230 may be formed on the body 210 of the horn 200. The body 210 of the horn 200 may have one surface facing the anvil 100, and one surface may be a flat surface. While welding is performed, the body 210 of the horn 200 and the anvil 100 may be configured to maintain a constant distance. While welding is performed, the welding protrusion 220 and the first penetrating protrusion 230 may contact the plurality of metal materials 610.

According to this configuration of the present disclosure, while welding is performed, the first penetrating protrusion230 may press the plurality of metal materials 610 downward. Due to the first penetrating protrusion 230, at least a portion of the plurality of metal materials 610 may be pushed downward. Alternatively, due to the first penetrating protrusion 230, the hole 611 passing through the plurality of metal materials 610 may be formed.

Referring to FIGS. 3 to 6, the anvil 100 of the welding machine according to an embodiment of the present disclosure may include a receiving portion 111 facing the first penetrating protrusion 230.

The receiving portion 111 may be formed in an upper surface of a body 110 of the anvil 100. When welding is performed, a distance between the receiving portion 111 and the first penetrating protrusion 230 may decrease. While welding is performed, at least the portion of the plurality of metal materials 610 pushed by the first penetrating protrusion 230 may be accommodated in the receiving portion 111.

According to this configuration of the present disclosure, while welding is performed, the receiving portion 111 may accommodate at least a portion of the plurality of metal materials 610, thereby making it easy to form the hole 611.

Referring to FIGS. 3 to 6, the anvil 100 of the welding machine according to an embodiment of the present disclosure may further include a cutting blade 120 formed around the receiving portion 111.

The cutting blade 120 may be formed inward along a circumference of the receiving portion 111. The cutting blade 120 may cut the at least portion of the plurality of metal materials 610. Referring to FIGS. 5 and 6, while welding is performed, at least a portion of the plurality of metal materials 610 may be pushed downward by the first penetrating protrusion 230. In this case, a pushed portion 612 may be cut by the cutting blade 120. As the first penetrating protrusion 230 vibrates in a circular trajectory, a cutting line may be formed along a circular trajectory. Accordingly, the at least portion of the plurality of metal materials 610 may be separated into a circular chip 612, and the hole 611 having a circular shape and passing through the plurality of metal materials 610 may be formed. The portion separated from the plurality of metal materials 610 may be referred to as a chip 612 or a piece 612.

According to this configuration of the present disclosure, while welding is performed, at least a portion of the plurality of metal materials 610 may be cut. Accordingly, whether welding has been successful may be easily determined and the reliability of determination may be improved.

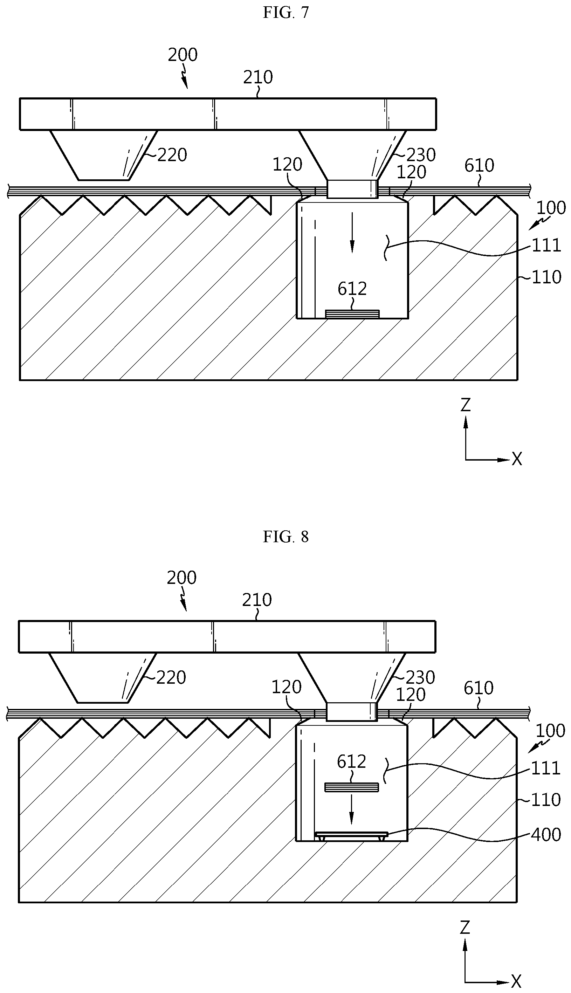

FIG. 7 is a view illustrating welding performed by a welding machine according to an embodiment of the present disclosure. Referring to FIG. 7, the anvil 100 of the welding machine according to an embodiment of the present disclosure may be configured so that at least a portion of the plurality of metal materials 610 is accommodated in the receiving portion 111. The receiving portion 111 may be formed at a position facing the first penetrating protrusion 230. A portion of the plurality of metal materials 610 pushed by the first penetrating protrusion 230 may be accommodated in the receiving portion 111. The chip 612 cut by the cutting blade 120 may fall down by gravity and may be accommodated in the receiving portion 111.

According to this configuration of the present disclosure, because the chip 612 generated during welding is accommodated in the receiving portion 111, the chip 612 may be separated from other components of the welding machine. Accordingly, welding defects or errors caused by the chip 612 may be prevented.

FIG. 8 is a view illustrating a welding machine according to another embodiment of the present disclosure. Referring to FIG. 8, the welding machine according to an embodiment of the present disclosure may further include a weight measuring unit 400. The weight measuring unit 400 may be located in the receiving portion 111 of the anvil 100. The processor may be configured to detect a weight measured by the weight measuring unit 400. For example, the weight measuring unit 400 may be a scale 400.

According to this configuration of the present disclosure, the chip 612 generated during welding may be placed on the scale 400. Accordingly, the weight measuring unit 400 may detect a weight of the chip 612. Accordingly, while welding is performed multiple times, the processor may detect that the chip 612 is generated or added by detecting an increase in a weight measured by the weight measuring unit 400.

Also, according to this configuration of the present disclosure, the processor may detect that welding defects have occurred when it is detected that there is no change in a weight of the scale while welding is performed multiple times.

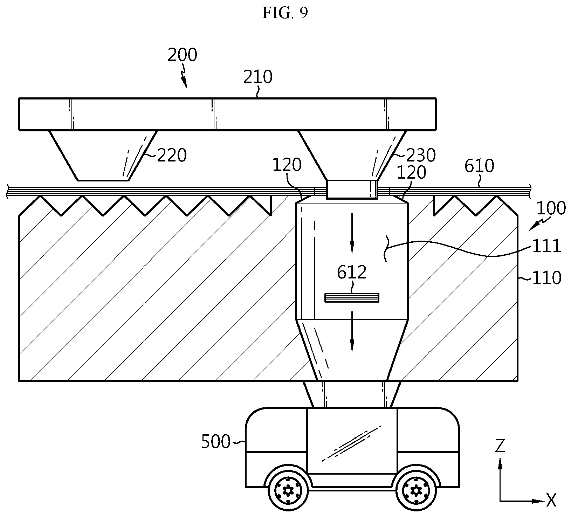

FIG. 9 is a view illustrating a welding machine according to still another embodiment of the present disclosure. Referring to FIG. 9, the welding machine according to an embodiment of the present disclosure may further include a suction unit 500. The receiving portion 111 of the anvil 100 may pass through the body 110. The suction unit 500 may be connected to or communicate with one end of the receiving portion 111. The chip 612 generated while welding is performed may be sucked by the suction unit 500 through the receiving portion 110.

According to this configuration of the present disclosure, because the chip 612 generated during welding is sucked by the suction unit 500, the chip 612 may be separated from other components of the welding machine. Also, because the chip 612 is not accumulated inside the receiving portion 111, the inside of the receiving portion 111 does not need to be emptied.

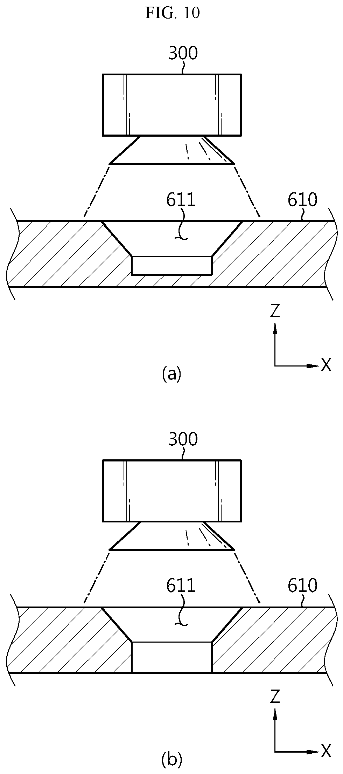

FIG. 10 is a view illustrating an example where welding quality is inspected by a welding machine according to an embodiment of the present disclosure. Referring to FIG. 10, the welding machine according to an embodiment of the present disclosure may further include a vision sensor 300 configured to detect the hole 611. The vision sensor 300 may detect the hole 611 formed in the plurality of metal materials 610 by the first penetrating protrusion 230. The vision sensor 300 may detect whether the hole 611 penetrates. The processor may determine that there are welding defects when the hole 611 does not pass through the plurality of metal materials 610 as shown in (a) of FIG. 10. Also, the processor may determine that welding has been successful when the hole 611 passes through the plurality of metal materials 610 as shown in (b) of FIG. 10.

According to this configuration of the present disclosure, whether welding has been successful may be determined rapidly and accurately.

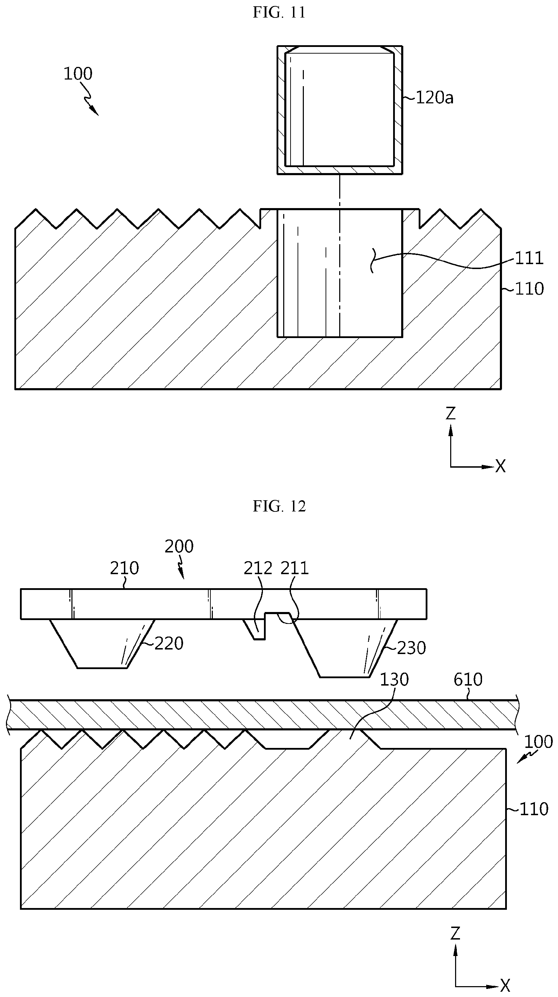

FIG. 11 is a view illustrating a welding machine according to still another embodiment of the present disclosure. Referring to FIG. 11, a cutting blade 120a of the welding machine according to still another embodiment of the present disclosure may be configured to be replaceable. The cutting blade 120a may be detachably coupled or fastened to the receiving portion 111 of the anvil 100. The cutting blade 120a may be formed to have an inner space. The chip 612 generated during welding may be accommodated or collected in the inner space of the cutting blade 120a.

According to this configuration of the present disclosure, the durability of the welding machine may be improved. The cutting blade 120a may wear out faster than other components of the welding machine. When the cutting blade 120a wears out, the chip 612 may not be generated smoothly and the reliability of determining whether welding has been successful may be reduced. However, because the cutting blade 120a is replaceable, maintenance of the welding machine may be facilitated.

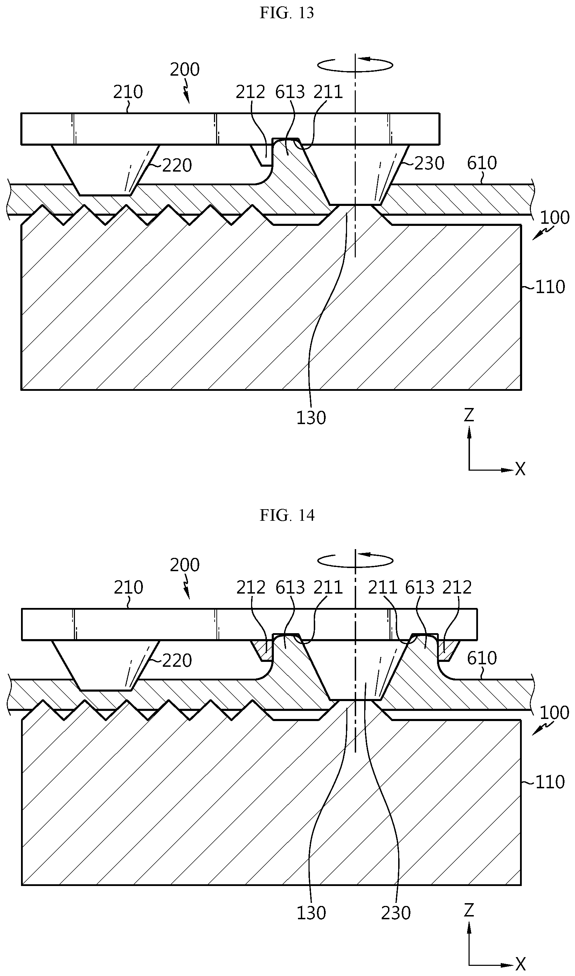

FIG. 12 is a view illustrating a welding machine according to still another embodiment of the present disclosure. FIG. 13 is a view illustrating welding performed by the welding machine of FIG. 12. FIG. 14 is a view illustrating a welding machine according to still another embodiment of the present disclosure. Referring to FIGS. 12 to 14, the anvil 100 of the welding machine according to an embodiment of the present disclosure may include a second penetrating protrusion 130 protruding toward the horn 200 and facing the first penetrating protrusion 230.

As welding is performed, the plurality of metal materials 610 located between the first penetrating protrusion 230 and the second penetrating protrusion 130 may be pushed outward. When the first penetrating protrusion 230 and the second penetrating protrusion 130 contact or meet each other, the hole 611 passing through the plurality of metal materials 610 may be formed. In this case, a pushed portion of the plurality of metal materials 610 may be moved around the first penetrating protrusion 230.

According to this configuration of the present disclosure, the hole 611 passing through the plurality of metal materials 610 may be formed. Also, even when the hole 611 passing through the plurality of metal materials 610 is formed, the chip 612 may not be generated.

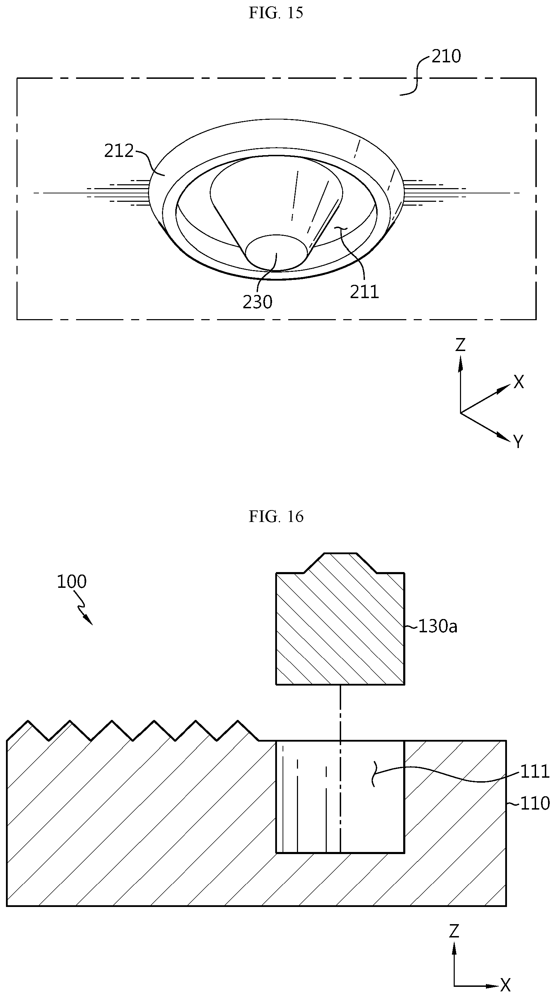

FIG. 15 is a view illustrating the first penetrating protrusion 230 of a welding machine according to still another embodiment of the present disclosure. Referring to FIGS. 12 to 15, the horn 200 of the welding machine according to an embodiment of the present disclosure may further include a groove 211 formed around the first penetrating protrusion 230. The groove 211 may be formed in the body 210 of the horn 200. The groove 211 may be formed upward. The groove 211 may be formed around the first penetrating protrusion 230 or adjacent to the first penetrating protrusion 230. Also, the groove 211 may extend along a circumference of the first penetrating protrusion 230. The groove 211 may be formed in a circular shape surrounding the first penetrating protrusion 230.

According to this configuration of the present disclosure, a portion of the plurality of metal materials 610 pushed by the first penetrating protrusion 230 and the second penetrating protrusion 130 may be moved along a surface of the first penetrating protrusion 230 and may be accommodated in the groove 211. Because the plurality of metal materials 610 are accommodated in the groove 211, the plurality of metal materials 611 may be separated from other components of the welding machine. Accordingly, due to the pushed plurality of metal materials 610, welding defects or errors may be prevented.

Referring to FIGS. 12 to 15, the horn 200 of the welding machine according to an embodiment of the present disclosure may be configured to form a protruding portion 613 around the hole 611 of the plurality of metal materials 610. A portion of the plurality of metal materials 610 pushed by the first penetrating protrusion 230 and the second penetrating protrusion 130 may be accommodated in the groove 211. Accordingly, the protruding portion 613 may be formed along a circumference of the hole 611 passing through the plurality of metal materials 610. That is, the groove 211 may be used to form the protruding portion 613.

According to this configuration of the present disclosure, the processor may determine whether welding has been successful by detecting the protruding portion 613. Because the processor detects the protruding portion 613 and the hole 611 passing through the plurality of metal materials 610, the accuracy of determining welding quality may be improved.

Referring to FIGS. 12 to 15, the horn 200 of the welding machine according to an embodiment of the present disclosure may further include a stopper 212. The stopper 212 may be formed on the body 210, and may protrude downward from the body 210. The stopper 212 may be formed along a circumference of the groove 211. The stopper 212 may extend to surround the groove 211. The stopper 212 may be formed in a circular shape surrounding the groove 211 or the first penetrating protrusion 230.

According to this configuration of the present disclosure, a portion of the plurality of metal materials 610 pushed by the first penetrating protrusion230 and the second penetrating protrusion 130 may be moved along a surface of the first penetrating protrusion 230 and may be accommodated in the groove 211. The stopper 212 may restrict the plurality of metal materials 610 from spreading widely. Also, the stopper 212 may guide the plurality of metal materials 610 to be stably accommodated in the groove 211. Because the plurality of metal materials 610 are accommodated in the groove 211, the plurality of metal materials 610 may be separated from other components of the welding machine. Accordingly, due to the pushed plurality of metal materials 610, welding defects or errors may be prevented.

FIG. 16 is a view illustrating a welding machine according to still another embodiment of the present disclosure. Referring to FIG. 16, a second penetrating protrusion 130a of the welding machine according to still another embodiment of the present disclosure may be configured to be replaceable. The second penetrating protrusion 130a may be detachably coupled or fastened to the receiving portion 111 of the anvil 100.

According to this configuration of the present disclosure, the durability of the welding machine may be improved. Because the second penetrating protrusion 130a contacts or rubs the first penetrating protrusion 230, the second penetrating protrusion 130a may wear out faster than other components of the welding machine. When the second penetrating protrusion 130a wears out, the hole 611 may not be smoothly formed and the reliability of determining whether welding has been successful may be reduced. However, because the second penetrating protrusion 130a is replaceable, maintenance of the welding machine may be facilitated.

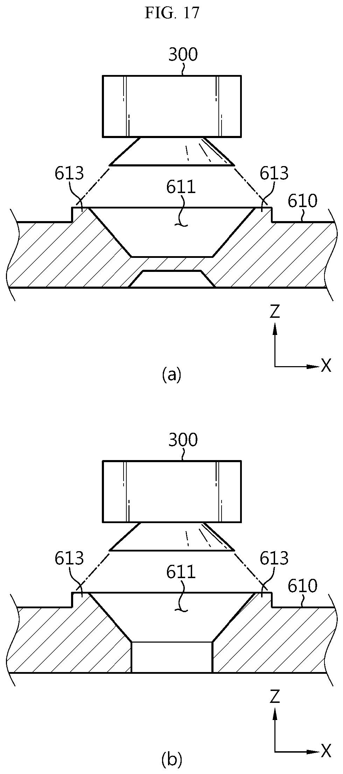

FIG. 17 is a view illustrating an example where welding quality is inspected by a welding machine according to still another embodiment of the present disclosure. Referring to FIG. 17, the welding machine according to an embodiment of the present disclosure may further include the vision sensor 300 configured to detect the hole 611. The vision sensor 300 may detect the hole 611 formed in the plurality of metal materials 610 by the first penetrating protrusion 230 and the second penetrating protrusion 130. The vision sensor 300 may detect whether the hole 611 penetrates. The processor may determine that there are welding defects when the hole 611 does not pass through the plurality of metal materials 610 as shown in (a) of FIG. 17. Also, the processor may determine that welding has been successful when the hole 611 passes through the plurality of metal materials 610 as shown in (b) of FIG. 17.

According to this configuration of the present disclosure, whether welding has been successful may be determined rapidly and accurately.

The battery cell 600 according to an aspect of the present disclosure may include the plurality of metal materials 610 welded by the welding machine of the present disclosure. In detail, the plurality of metal materials 610 welded by the welding machine of the present disclosure may be the plurality of electrode tabs 610.

It will be understood by one of ordinary skill in the art that when terms indicating directions such as upper, lower, left, right, front, and rear are used, these terms are only for convenience of explanation and may vary according to a position of a target object, a position of an observer, etc.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

## Claims

1. A welding machine for welding a plurality of metal materials, the welding machine comprising:
an anvil on which the plurality of metal materials are placed;
a horn located over the anvil and comprising a plurality of protrusions protruding toward the anvil; and
a processor configured to vibrate the horn to form a hole passing through the plurality of metal materials.

2. The welding machine according to claim 1, further comprising a vision sensor configured to detect the hole.

3. The welding machine according to claim 1, wherein the processor is configured to vibrate the plurality of protrusions in a circular trajectory.

4. The welding machine according to claim 1, wherein the plurality of protrusions comprise:
a welding protrusion configured to weld the plurality of metal materials; and
a first penetrating protrusion configured to form a hole passing through the plurality of metal materials.

5. The welding machine according to claim 4, wherein a protrusion length of the first penetrating protrusion is greater than a protrusion length of the welding protrusion.

6. The welding machine according to claim 4, wherein the anvil comprises a receiving portion facing the first penetrating protrusion.

7. The welding machine according to claim 6, wherein the anvil further comprises a cutting blade formed around the receiving portion.

8. The welding machine according to claim 6, wherein the anvil is configured so that at least a portion of the plurality of metal materials is accommodated in the receiving portion.

9. The welding machine according to claim 6, wherein the cutting blade is configured to be replaceable.

10. The welding machine according to claim 4, wherein the anvil comprises a second penetrating protrusion protruding toward the horn and facing the first penetrating protrusion.

11. The welding machine according to claim 10, wherein the horn further comprises a groove formed around the first penetrating protrusion.

12. The welding machine according to claim 10, wherein the horn is configured to form a protruding portion around the hole of the plurality of metal materials.

13. The welding machine according to claim 10, wherein the second penetrating protrusion is configured to be replaceable.

14. A battery cell comprising a plurality of metal materials welded by the welding machine of any one of claims 1 to 13.
